(19) Europäisches Patentamt
European Patent Office
Office européen des brevets

(11) EP 4 752 968 A2

(12) EUROPEAN PATENT APPLICATION

(43) Date of publication:
03.06.2026 Bulletin 2026/23

(51) International Patent Classification (IPC):
H01M 4/36 (2006.01)   H01M 10/0525 (2010.01)
H01M 4/58 (2010.01)

(21) Application number: 25211746.0

(22) Date of filing: 28.10.2025

(52) Cooperative Patent Classification (CPC):
H01M 4/5825; C01B 25/45; C01P 2002/60;
C01P 2002/72; C01P 2002/74; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.11.2024 JP 2024206467

(71) Applicant: TOYOTA JIDOSHA KABUSHIKI
KAISHA
Toyota-shi, Aichi-ken 471-8571 (JP)

(72) Inventors:
• MAHARA, Takanori
Toyota-shi, 471-8571 (JP)
• YOKOE, Kenji
Toyota-shi, 471-8571 (JP)

(74) Representative: Kuhnen & Wacker
Patent- und Rechtsanwaltsbüro PartG mbB
Prinz-Ludwig-Straße 40 A
85354 Freising (DE)

(54) POSITIVE ELECTRODE ACTIVE MATERIAL, ELECTRODE, BATTERY, AND METHOD FOR PRODUCING POSITIVE ELECTRODE ACTIVE MATERIAL

(57) The present disclosure relates to a positive electrode active material. The positive electrode active material includes a crystal structure belonging to a space group Pnma and an X-ray diffraction pattern satisfying a relationship of "$5.8 \leq I_{(200)}/I_{(020)}$", wherein "$I_{(200)}$" represents an integrated intensity of a 200 diffraction peak and "$I_{(020)}$" represents an integrated intensity of a 020 diffraction pattern.

# FIG. 3

| No. | XRD Pattern | | Output Characteristics |
| --- | --- | --- | --- |
| | Intensity Ratio [ $I_{(200)}/I_{(020)}$ ] | Crystallite Size [D] | Normalized IV Resistance |
| | [−] | [Å] | [−] |
| 1 | 4.5 | 878 | 1.00 |
| 2 | 2.7 | 570 | 1.33 |
| 3 | 7.1 | 1316 | 0.80 |
| 4 | 14.0 | 1474 | 0.83 |
| 5 | 14.6 | 1540 | 0.86 |
| 6 | 5.8 | 210 | 0.85 |
| 7 | 11.9 | 823 | 0.78 |
| 8 | 16.8 | 2434 | 0.95 |

EP 4 752 968 A2

**Description**

BACKGROUND OF THE INVENTION

1. Field of the Invention

The present disclosure relates to a positive electrode active material, an electrode, a battery, and a method for producing a positive electrode active material.

2. Description of Related Art

WO 2016/158566 discloses lithium manganese phosphate nanoparticles having a peak intensity ratio $I_{20}/I_{29}$ of X-ray diffraction of 0.88 or more and 1.05 or less and a crystallite size of 10 nm or more and 50 nm or less.

SUMMARY OF THE INVENTION

Olivine-type positive electrode active materials have been proposed. Olivine-type positive electrode active materials have a crystal structure (olivine-type structure) belonging to a space group Pnma. It has heretofore been proposed that a discharge capacity is increased by, for example, controlling the orientation of primary particles. However, there is room for improvement in output characteristics.

The present disclosure relates to a positive electrode active material capable of improving output characteristics, an electrode, a battery, and a method for producing a positive electrode active material.

Hereinbelow, the technical configurations and functions and effects of the present disclosure will be described. It should be noted that action mechanisms include presumptions. The action mechanisms do not limit the technical scope of the present disclosure.

A positive electrode active material according to a first aspect of the present disclosure includes a crystal structure belonging to a space group Pnma and an X-ray diffraction pattern satisfying a relationship of "5.8 ≤ $I_{(200)}/I_{(020)}$". The "$I_{(200)}$" represents an integrated intensity of a 200 diffraction peak. The "$I_{(020)}$" represents an integrated intensity of a 020 diffraction peak.

In an olivine-type structure, Li is considered to diffuse in the direction of a b axis. The b axis is parallel to a 200 plane and is orthogonal to a 020 plane. In an X-ray diffraction (XRD) pattern, the intensity ratio of the 200 diffraction peak to the 020 diffraction peak "$I_{(200)}/I_{(020)}$" is considered to be associated with the b-axis orientation of the crystal structure. When the relationship of "5.8 ≤ $I_{(200)}/I_{(020)}$" is satisfied, output characteristics are expected to improve. The reason for this is considered to be that the b-axis orientation stronger than ever before increases the number of sites through which Li can enter and exit crystallites.

In the positive electrode active material according to the first aspect of the present disclosure, the X-ray diffraction pattern may satisfy a relationship of "$I_{(200)}/I_{(020)}$ ≤ 16.8".

In the positive electrode active material according to the first aspect of the present disclosure, the X-ray diffraction pattern may satisfy a relationship of "$I_{(200)}/I_{(020)}$ ≤ 14.6".

When the relationship of "$I_{(200)}/I_{(020)}$ ≤ 14.6" is satisfied, output characteristics are expected to improve.

The positive electrode active material according to the first aspect of the present disclosure may include a crystallite size of 210 Å or more and 2434 Å or less.

When the crystallite size is 210 Å to 2434 Å, output characteristics are expected to improve.

In the positive electrode active material according to the first aspect of the present disclosure, the crystallite size may be 1540 Å or less.

When the crystallite size is 1540 Å or less, output characteristics are expected to improve.

The positive electrode active material according to the first aspect of the present disclosure may include at least one selected from the group consisting of lithium manganese phosphate and lithium manganese iron phosphate.

As an olivine-type positive electrode material, lithium iron phosphate (LFP) is known. Lithium manganese phosphate (LMP) and lithium manganese iron phosphate (LMFP) may have a higher plateau potential than LFP. LMP and LMFP are considered to be advantageous for high output. On the other hand, LMP and LMFP are inferior in electron conductivity to LFP. LMP and LMFP are required to be further improved in output characteristics. The crystal structure according to the present disclosure is considered to be suitable for LMP and LMFP.

An electrode according to a second aspect of the present disclosure may include a positive electrode layer. The positive electrode layer may include the positive electrode active material according to the first aspect of the present disclosure.

The positive electrode layer may also be referred to as a "positive electrode active material layer", a "positive electrode mixture layer", or the like. The "electrode" may either be a "monopolar electrode (positive electrode)" or a "bipolar electrode" as long as a positive electrode layer is included.

A battery according to a third aspect of the present disclosure may include the electrode according to the second aspect.

The battery according to the third aspect of the present disclosure may include a bipolar structure.

The bipolar structure can be formed by stacking bipolar electrodes. It is expected that the bipolar structure improves, for example, output characteristics.

A method for producing a positive electrode active material according to a fourth aspect of the present disclosure includes charging a precursor of the positive electrode active material into a graphite crucible, placing, in a heat treatment furnace in a nitrogen atmosphere, the graphite crucible into which the precursor has been charged, increasing a temperature in the heat treatment furnace to 200°C at a temperature increase rate of 3°C/min, maintaining the temperature in the heat treatment furnace at 200°C for 1 hour, increasing the temperature in the heat treatment furnace to 1000°C at a temperature increase rate of 5°C/min, maintaining the temperature in the heat treatment furnace at 1000°C for 5 hours, decreasing the temperature in the heat treatment furnace to 600°C at a temperature decrease rate of 10°C/min, maintaining the temperature in the heat treatment furnace at 600°C for 5 hours, and decreasing the temperature in the heat treatment furnace to room temperature at a temperature decrease rate of 15°C/min.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic perspective view of a battery according to a present embodiment;
FIG. 2 is a schematic cross-sectional view taken along the line II-II in FIG. 1;
FIG. 3 is a table showing experimental results;
FIG. 4 is a graph showing a relationship between intensity ratio "$I_{(200)}/I_{(020)}$" and IV resistance; and
FIG. 5 is a graph showing a relationship between crystallite size "D" and IV resistance.

## DETAILED DESCRIPTION OF EMBODIMENTS

### Terms and Phrases

The terms "comprise", "contain", "have" and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, a particle may refer to a plurality of particles, assemblies of particles, or powder particles. It should be noted that a "plurality of particles" may also be referred to as a "group of particles".

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "$\leq$" and "$\geq$", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, $\pm5\%$, $\pm3\%$, or $\pm1\%$. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

An intensity ratio "$I_{(200)}/I_{(020)}$" is determined according to the following procedure. First, the XRD pattern of a positive electrode active material is acquired. Powder XRD measurement can be performed, for example, under the following conditions.

Method of analysis: Wide angle X-ray diffraction
Measurement device: SmartLab II (manufactured by Rigaku Holdings Corporation)
Measurement angle: 10° to 120°
X-ray tube: CuK$\alpha$
Tube voltage: 45 kV
Tube current: 200 mA
Measurement method: Continuous measurement
Step: 0.02
Speed: 2°/min
IS: 1/2
RS: 20 mm
Detection mode: One-dimensional mode

The XRD pattern is subjected to background processing. Matching search is performed on the XRD pattern to determine a space group to which a crystal structure belongs. In the XRD pattern, points having a height of 1/100 or more of the height of the maximum peak are regarded as a peak. An intensity in a region regarded as a peak is integrated to determine an integrated intensity. "$I_{(200)}$" refers to the integrated intensity of a 200 diffraction peak. The 200 diffraction peak ($28° \leq 2\theta \leq 32°$) corresponds to a 200 plane. "$I_{(020)}$" refers to the integrated intensity of a 020 diffraction peak. The 020 diffraction peak ($16° \leq 2\theta \leq 18°$) corresponds to a 020 plane.

A "crystallite size" is calculated by Scherrer method. The full width at half maximum (FWHM) of the 020 diffraction peak is determined based on a background. The full width at half maximum is the width of the peak at half of a peak height. A crystallite size is determined by the following calculation formula.

$$D = K\lambda/B\cos\theta$$

D: Crystallite size (unit: nm)
K: Scherrer constant (= 0.89)
$\lambda$: wavelength of X-ray (unit: nm)
B: FWHM (unit: rad)
$\theta$: Bragg angle (unit: rad)

"D50" refers to a particle diameter corresponding to 50% of a cumulative amount in a volume-based particle size distribution (cumulative size distribution). The volume-based particle size distribution is measured by a laser diffraction particle size distribution measurement device.

A "maximum Feret diameter" refers to the length of long side of minimum bounding rectangle (MBR) of a particle in the SEM (Scanning Electron Microscope) image or TEM (transmission Electron Microscope) image of the particle.

The chemical composition of a compound can be measured by ICP-AES (Inductively Coupled Plasma Atomic Emission Spectroscopy). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

A stoichiometric composition formula represents a typical example of a compound. A compound may have a non-stoichiometric composition. For example, "$Al_2O_3$" is not limited to a compound having an amount-of-substance ratio (mole ratio) of "Al/O = 2/3". Unless otherwise specified, "$Al_2O_3$" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

Positive Electrode Active Material

A positive electrode active material may be in, for example, a powder form. The D50 of the positive electrode active material may be, for example, 5 $\mu$m or more, 10 $\mu$m or more, 15 $\mu$m or more, or 20 $\mu$m or more. The D50 of the positive electrode active material may be, for example, 30 $\mu$m or less, 25 $\mu$m or less, 20 $\mu$m or less, 15 $\mu$m or less, or 10 $\mu$m or less.

The positive electrode active material may include a secondary particle. The secondary particle is an assembly of primary particles. The secondary particle may have any shape. The secondary particle may be, for example, spherical, rod-like, or angular. When the secondary particle is spherical, for example, fillability is expected to improve. The sphericity of the secondary particle may be, for example, 0.85 or more, 0.90 or more, or 0.95 or more. The sphericity of the secondary particle may be, for example, 1 or less, 0.95 or less, or 0.90 or less. The "sphericity" refers to the degree of circularity in an SEM image. The sphericity (degree of circularity) is determined by the following formula. The sphericity is defined as the arithmetic average of 30 secondary particles.

$$\psi = 4\pi S/L^2$$

$\psi$: Sphericity (Degree of circularity)
$\pi$: Circle ratio
S: Sectional area of particle (Area of region surrounded by outline of particle)
L: Perimeter of particle (Length of outline of particle)

The primary particle may have any shape. The primary particle may be, for example, spherical, rod-like, or angular. The primary particle may be a nanoparticle. The maximum Feret diameter of the primary particle may be, for example, 20 nm to 300 nm. The maximum Feret diameter of the primary particle may be, for example, 25 nm or more, 50 nm or more, 75 nm or more, 100 nm or more, 150 nm or more, 200 nm or more, or 250 nm or more. The maximum Feret diameter of the primary particle may be, for example, 250 nm or less, 200 nm or less, 150 nm or less, 100 nm or less, 75 nm or less, or 50 nm or less. The maximum Feret diameter of the primary particle is defined as the arithmetic average of 30 primary particles.

Carbon may cover the surface of the primary particle. Specifically, a carbon layer or a carbon coating may be formed on the surface of the primary particle. The carbon may cover part of the surface of the primary particle or may cover the entire surface of the primary particle. The carbon may be derived from, for example, sugar. The amount of the carbon attached may be, for example, 0.1% or more, 0.5% or more, 1% or more, 2% or more, 3% or more, or 4% or more in terms of mass fraction relative to the secondary particle. The amount of the carbon attached may be, for example, 5% or less, 4% or less, or 3% or less in terms of mass fraction relative to the secondary particle.

The positive electrode active material has a crystal structure belonging to a space group Pnma. Hereinafter, a compound having such a crystal structure is also referred to as an "olivine-type compound".

When the XRD pattern of the olivine-type compound satisfies a relationship of "$5.8 \leq I_{(200)}/I_{(020)}$", output characteristics are expected to improve. The intensity ratio "$I_{(200)}/I_{(020)}$" may be, for example, 6.0 or more, 6.5 or more, 7.0 or more, 7.1 or more, 7.5 or more, 8.0 or more, 8.5 or more, 9.0 or more, 9.5 or more, 10.5 or more, 11.0 or more, 11.9 or more, 12.0 or more, 12.5 or more, 13.0 or more, 13.5 or more, 14.0 or more, 14.5 or more, 14.6 or more, 15.0 or more, 15.5 or more, 16.0 or more, or 16.5 or more. The intensity ratio "$I_{(200)}/I_{(020)}$" may be, for example, 20.0 or less, 19.0 or less, 18.0 or less, 17.0 or less, 16.8 or less, 16.5 or less, 16.0 or less, 15.5 or less, 15.0 or less, 14.6 or less, 14.5 or less, 14.0 or less, 13.5 or less, 13.0 or less, 12.5 or less, 12.0 or less, 11.9 or less, 11.0 or less, 10.5 or less, 9.5 or less, 9.0 or less, 8.5 or less, 8.0 or less, 7.5 or less, 7.1 or less, 7.0 or less, 6.5 or less, or 6.0 or less.

When the positive electrode active material has a crystallite size of 210 Å or more and 2434 Å or less (21 nm or more and 243.4 nm or less), output characteristics are expected to improve. The crystallite size may be, for example, 300 Å or more, 400 Å or more, 500 Å or more, 600 Å or more, 700 Å or more, 800 Å or more, 823 Å or more, 900 Å or more, 1000 Å or more, 1100 Å or more, 1200 Å or more, 1300 Å or more, 1316 Å or more, 1400 Å or more, 1474 Å or more, 1500 Å or more, 1540 Å or more, 1600 Å or more, 1700 Å or more, 1800 Å or more, 1900 Å or more, 2000 Å or more, 2100 Å or more, 2200 Å or more, 2300 Å or more, 2400 Å or more, or 2434 Å or more. The crystallite size may be, for example, 3000 Å or less, 2500 Å or less, 2434 Å or less, 2400 Å or less, 2300 Å or less, 2200 Å or less, 2100 Å or less, 2000 Å or less, 1900 Å or less, 1800 Å or less, 1700 Å or less, 1600 Å or less, 1540 Å or less, 1500 Å or less, 1474 Å or less, 1400 Å or less, 1316 Å or less, 1300 Å or less, 1200 Å or less, 1100 Å or less, 1000 Å or less, 900 Å or less, 823 Å or less, 800 Å or less, 700 Å or less, 600 Å or less, 500 Å or less, 400 Å or less, or 300 Å or less.

The positive electrode active material may contain, for example, at least one selected from the group consisting of LFP, LMP, and LMFP. The positive electrode active material may contain, for example, at least one selected from the group consisting of LMP and LMFP.

The positive electrode active material may have a composition represented by, for example, a general formula of "$Li_aMn_{1-x}Fe_xPO_4$". In the general formula, an Li compositional ratio "a" may be, for example, 0.5 or more, 0.6 or more, 0.7 or more, 0.8 or more, 0.9 or more, 1.0 or more, 1.1 or more, 1.2 or more, 1.3 or more, or 1.4 or more. In the general formula, the Li compositional ratio "a" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. In the general formula, a relationship of, for example, "$0.5 \leq a \leq 1.5$" may be satisfied. In the general formula, an Fe compositional ratio "x" may be, for example, 0 or more, 0.1 or more, 0.2 or more, 0.3 or more, 0.4 or more, 0.5 or more, 0.6 or more, 0.7 or more, 0.8 or more, or 0.9 or more. In the general formula, the Fe compositional ratio "x" may be, for example, 1.0 or less, 0.9 or less, 0.8 or less, 0.7 or less, 0.6 or less, 0.5 or less, 0.4 or less, 0.3 or less, 0.2 or less, or 0.1 or less. In the general formula, a relationship of, for example, "$0.2 \leq x \leq 0.5$" may be satisfied.

A dopant may be added to the positive electrode active material (olivine-type compound). The dopant refers to an element other than lithium (Li), manganese (Mn), iron (Fe), phosphorus (P), and oxygen (O). The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and actinide.

The positive electrode active material may further contain another component as long as it contains an olivine-type compound. The mixing ratio (mass ratio) between the olivine-type compound and the another component may be, for example, "olivine-type compound/another component = 9/1 to 1/9", "olivine-type compound/another component = 8/2 to 2/8", "olivine-type compound/another component = 7/3 to 3/7", or "olivine-type compound/another component = 6/4 to 4/6". The positive electrode active material may be, for example, a mixture of a powder of an olivine-type compound and a powder of another component. The another component may contain, for example, at least one selected from the group consisting of Li[NiCoMn]$O_2$ (layered structure), Li[NiCoAl]$O_2$ (layered structure), LiMnO$_2$ (rock salt structure), and Li[NiMn]$_2O_4$ (spinel structure). It should be noted that [NiCoMn] or the like indicates that the sum of the compositional ratios of elements in parentheses is 1. The compositional ratios of the individual elements in parentheses are not limited as long as the sum of them is 1.

Liquid-Based Battery

In some present embodiments, a battery may be a liquid-based battery. The "liquid-based battery" refers to a battery including an electrolytic solution. For example, a polymer battery includes an electrolytic solution and therefore belongs to liquid-based batteries. In some present embodiments, the battery has a monopolar structure. In the monopolar structure, a power-generating element may be of a wound type or a lamination type. In some present embodiments, the battery has a bipolar structure. As an example, a battery having a bipolar structure (bipolar battery) will be described.

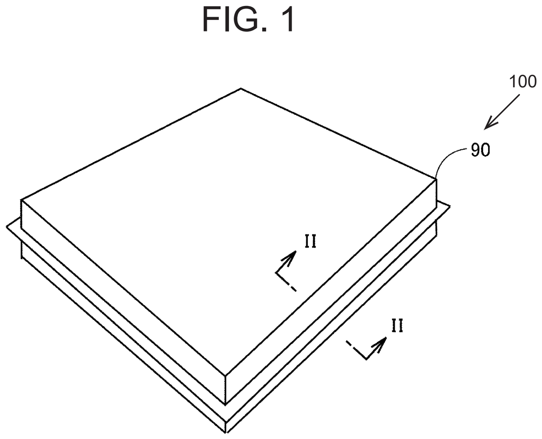

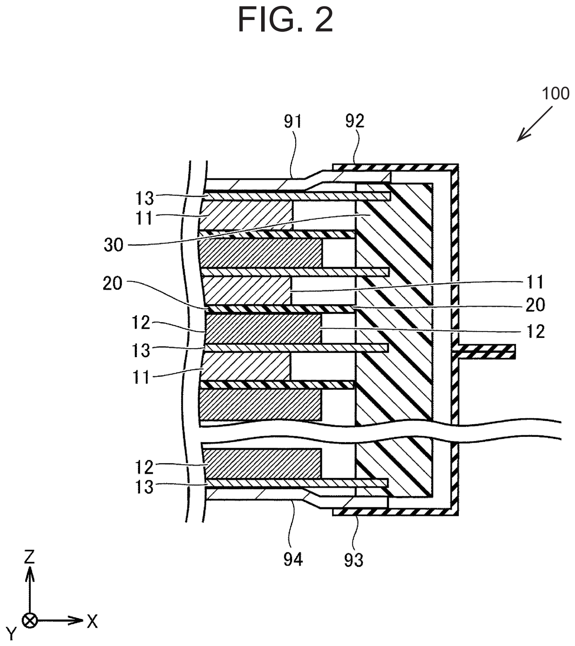

FIG. 1 is a schematic perspective view of a battery according to the present embodiment. FIG. 2 is a schematic sectional view taken along the line II-II shown in FIG. 1. Hereinafter, a "perpendicular direction" refers to a normal direction relative to the surface of a sheet-shaped member (e.g., a foil or an electrode). An "in-plane direction" refers to any direction orthogonal to the perpendicular direction. In the diagram of the present embodiment, a Z-axis direction corresponds to the perpendicular direction. An X-axis direction and a Y-axis direction are examples of the in-plane direction.

A battery 100 includes an exterior body 90 and a power-generating element. The exterior body 90 houses the power-generating element. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element includes a plurality of bipolar electrodes. The bipolar electrodes are laminated in the perpendicular direction (Z-axis direction). Each of the bipolar electrodes includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around the entire periphery of the power-generating element in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element includes a sealing material 30. The sealing material 30 is joined to the current collector foils 13 at the end of the sealing material 30 in the in-plane direction. For example, the sealing material 30 may be thermally welded to the current collector foils 13. For example, the sealing material 30 may be disposed along the entire periphery of the power-generating element in the in-plane direction. The sealing material may contain, for example, a resin material. The sealing material 30 seals spaces between the current collector foils 13 adjacent to each other in the perpendicular direction. Cells are formed by sealing the spaces between the current collector foils 13 with the sealing material 30. The cells are minimum units of the power-generating element. The battery 100 includes the cells and therefore may also be referred to as a "bipolar module". Each of the cells is hermetically sealed. The cells are isolated from each other. Each of the cells includes the positive electrode layer 11, a separator 20, the negative electrode layer 12, and an electrolytic solution.

Positive Electrode Layer

The positive electrode layer 11 is attached to one side of the current collector foil 13. For example, the positive electrode layer 11 may have a groove. The positive electrode layer 11 may be formed, for example, in stripes. The positive electrode layer 11 contains a positive electrode active material. That is, the battery 100 includes a positive electrode active material. The details of the positive electrode active material are as described above.

The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, $MoS_2$, or $WO_3$.

Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The negative electrode layer 12 contains a negative electrode active material.

The negative electrode active material may be, for example, in a particulate or sheet form. The D50 of the negative electrode active material may be, for example, 1 $\mu$m or more, 5 $\mu$m or more, or 10 $\mu$m or more. The D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, an Si-C-composite material, Li metal, an Li-based alloy, and lithium titanate. In some present embodiments, the battery may be an Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of $Al(OH)_3$, $AlOOH$, $Al_2O_3$, $WO_3$,

$Li_2CO_3$, $LiHCO_3$, and $Li_3PO_4$.

The alloy-based active material may contain, for example, at least one selected from the group consisting of Si, Li silicate, SiO, an Si-based alloy, tin (Sn), SnO, and an Sn-based alloy.

The SiO may have a composition represented by, for example, a general formula of "$SiO_x$". In the general formula, a relationship of, for example, "$0 < x < 2$", "$0.5 \leq x \leq 1.5$", or "$0.8 \leq x \leq 1.2$" may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 $\mu$m or less. The average pore diameter of the resin film may be, for example, 0.01 $\mu$m to 1 $\mu$m or 0.1 $\mu$m to 0.5 $\mu$m. The "average pore diameter" can be measured by mercury intrusion porosimetry. The resin film may have a Gurley value of, for example, 50 s/100 $cm^3$ to 250 s/100 $cm^3$. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 $\mu$m to 50 $\mu$m or 10 $\mu$m to 25 $\mu$m.

The resin film may have, for example, a single-layer structure. The resin film may consist of, for example, a PE layer. The skeleton of the PE layer is formed of PE.

The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 $\mu$m to 20 $\mu$m. The PP layer may have a thickness of, for example, 3 $\mu$m to 10 $\mu$m.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 $\mu$m to 10 $\mu$m or 1 $\mu$m to 5 $\mu$m. The inorganic particles may contain, for example, a heat-resistant material. The inorganic particle layer containing a heat-resistance material is also referred to as "HRL (Heat Resistance Layer)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 $\mu$m to 10 $\mu$m or 0.5 $\mu$m to 3 $\mu$m. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 $\mu$m to 50 $\mu$m, 0.5 $\mu$m to 20 $\mu$m, 0.5 $\mu$m to 10 $\mu$m, or 1 $\mu$m to 5 $\mu$m. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 $\mu$m to 10 $\mu$m or 0.5 $\mu$m to 3 $\mu$m.

The separator 20 may include, for example, a mixed layer. The mixed layer contains both inorganic particles and organic particles.

Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L.

"mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by a relational expression of "$V_{EC} + V_{FEC} + V_{EMC} + V_{DMC} + V_{DEC} = 10$". In the relational expression, "$V_{EC}$, $V_{FEC}$, $V_{EMC}$, $V_{DMC}$, and $V_{DEC}$" respectively represent the volume ratios of EC, FEC, EMC, DMC, and DEC. The following relationships are satisfied: "$1 \leq V_{EC} \leq 4$", "$0 \leq V_{FEC} \leq 3$", "$V_{EC} + V_{FEC} \leq 4$", "$0 \leq V_{EMC} \leq 9$", "$0 \leq V_{DMC} \leq 9$", "$0 \leq V_{DEC} \leq 9$", and "$6 \leq V_{EMC} + V_{DMC} + V_{DEC} \leq 9$". For example, a relationship of "$1 \leq V_{EC} \leq 2$" or "$2 \leq V_{EC} \leq 3$" may be satisfied. For example, a relationship of "$1 \leq V_{FEC} \leq 2$" or "$2 \leq V_{FEC} \leq 4$" may be satisfied. For example, a relationship of "$3 \leq V_{EMC} \leq 4$" or "$6 \leq V_{EMC} \leq 8$" may be satisfied. For example, a relationship of "$3 \leq V_{DMC} \leq 4$" or "$6 \leq V_{DMC} \leq 8$" may be satisfied. For example, a relationship of "$3 \leq V_{DEC} \leq 4$" or "$6 \leq V_{DEC} \leq 8$" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), $\gamma$-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

ALL-Solid-State Battery

In some present embodiments, the battery may be an all-solid-state battery. The all-solid-state battery may have a bipolar structure. The all-solid-state battery includes a solid electrolyte instead of the electrolytic solution and the separator 20. The solid electrolyte may be contained also in the positive electrode layer 11 and the negative electrode layer 12. Instead of the separator 20, a solid electrolyte layer separates the negative electrode layer 12 from the positive electrode layer 11. The solid electrolyte layer contains, for example, a solid electrolyte and a binder.

The solid electrolyte may be, for example, a powder. The solid electrolyte may have a D50 of, for example, 0.1 μm or more, 0.2 μm or more, 0.3 μm or more, 0.4 μm or more, 0.5 μm or more, 0.6 μm or more, 0.7 μm or more, 0.8 μm or more, 0.9 μm or more, or 1 μm or more. The solid electrolyte may have a D50 of, for example, 5 μm or less, 4 μm or less, 3 μm or less, 2 μm or less, or 1 μm or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass ceramic (crystallized glass) phase. The crystalline phase may be of, for example, an argyrodite type or an LGPS type. The sulfide solid electrolyte contains Li and sulfur (S). The sulfide solid electrolyte may further contain any component in addition to Li and S.

The sulfide solid electrolyte may contain, for example, at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-GeS_2-P_2S_5$, $Li_2S-P_2S_5$, $Li_{10}GeP_2S_{12}$, $Li_4P_2S_6$, $Li_7P_3S_{11}$, $Li_3PS_4$, and $LI_7PS_6$.

For example, "$LiI-LiBr-Li_3PS_4$" refers to a sulfide solid electrolyte generated by mixing LiI, LiBr, and $Li_3PS_4$ in any amount-of-substance ratio. For example, the sulfide solid electrolyte may be generated by a mechanochemical method. A mixing ratio may be specified by placing a numeral in front of each of the raw materials. For example, "$10LiI-15LiBr-75Li_3PS_4$" indicates that the mixing ratio is "$LiI/LiBr/Li_3PS_4 = 10/15/75$ (amount-of-substance ratio)".

The sulfide solid electrolyte may have a composition represented by, for example, a general formula of "$xLi_2S-(1-x)P_2S_5$". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.7 or less, 0.75 or less, 0.6 or less, 0.5 or less, 0.4 or less, 0.3 or less, 0.2 or less, or 0.1 or less. For example, when "x = 0.75", "$xLi_2S-(1-x)P_2S_5$" may have a composition of $Li_3PS_4$.

The sulfide solid electrolyte may have a composition represented by, for example, a general formula of "$yLiI-zLiBr-(100-y-z)[xLi_2S-(1-x)P_2S_5]$". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

The sulfide solid electrolyte may have a composition represented by, for example, a general formula of "$Li_{7-x-2y}PS_{6-x-y}X_y$". In the general formula, relationships of "$0 < 7 - x - 2y$", "$0 < 6 - x - y$", "$0 \leq x$", and "$0 \leq y$" are satisfied. "X" may contain, for example, at least one selected from the group consisting of fluorine (F), chlorine (Cl), bromine (Br), and iodine (I).

The sulfide solid electrolyte may have a composition represented by, for example, a general formula of "$Li_{4-x}M_{1-x}P_xS_4$". In the general formula, "x" may be, for example, more than 0. 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may contain, for example, at least one selected from the group consisting of Al, Zn, In, Ge, Si, Sn, Sb, Ga, and Bi.

The sulfide solid electrolyte may have a composition represented by, for example, a general formula of "$Li_{10+x}Ge_{1+x}P_{2-x}S_{12}$". In the general formula "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS-type crystalline phase.

The halide solid electrolyte may have a composition represented by, for example, a general formula of "$Li_{6-na}M_aX_6$". In the general formula, "n" represents the oxidation number of "M". "M" may contain, for example, an atom having an oxidation number of +3. "M" may contain, for example, an atom having an oxidation number of +4. "M" may contain, for example, at least one selected from the group consisting of Y, Al, Ti, Zr, Ca, and Mg. For example, a relationship of "0 < a < 2" may be satisfied. "X" may contain, for example, at least one selected from the group consisting of F, Cl, Br, and I.

The halide solid electrolyte may have a composition represented by, for example, a general formula of "$Li_{3-a}Ti_aAl_{1-a}F_6$". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

The halide solid electrolyte may have a composition represented by, for example, a general formula of "$Li_3YCl_aBr_bI_{6-a-b}$". In the general formula, a relationship of, for example, "$0 \leq a + b \leq 6$" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

The oxide solid electrolyte may contain at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$. The hydride solid electrolyte may contain, for example, $LiBH_4$. The nitride solid electrolyte may contain, for example, $Li_3N$ or $Li_3BN_2$.

Preparation of Samples

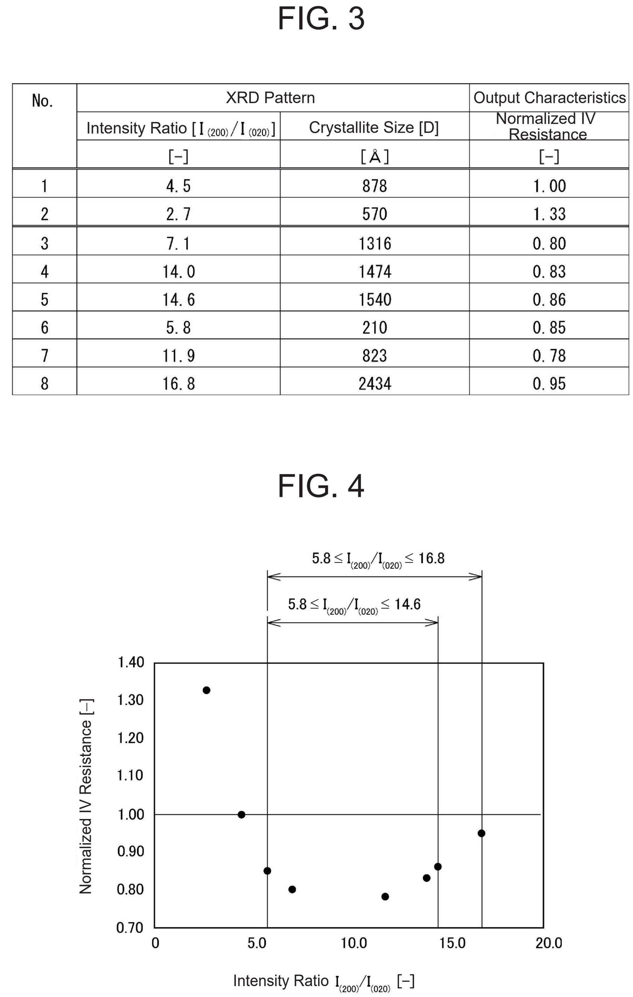

FIG. 3 is a table showing experimental results. According to the following procedure, No. 1 to No. 8 positive electrode active materials were produced.

Formation of Slurry

Lithium hydroxide monohydrate, manganese carbonate, ferric phosphate, and lithium dihydrogen phosphate are weighed to achieve a compositional ratio represented by a composition formula of "$Li_{1.04}Mn_{0.6}Fe_{0.4}PO_4$". Glucose is weighed such that its mass fraction is 8% relative to the total mass of the raw materials. Glucose is used to form a carbon layer on the surfaces of primary particles in a final product. The weighed materials and water are mixed to form a slurry. The solid content concentration of the slurry is 30% in terms of mass fraction. Wet grinding is performed to achieve a D50 of 0.30 μm.

Formation of Secondary Particles

The slurry is spray-dried to form secondary particles. Each of the primary particles constituting the secondary particles is a precursor of LMFP. The target value of D50 of the secondary particles is 9±1 μm. The settings of a spray drier are as follows.

Air inlet temperature: 250°C
Air outlet temperature 115±15°C
Intake pressure: 2.0 MPa
Nozzle pressure of spray nozzle: 0.2±0.1 MPa

Firing

The secondary particles (precursor) are charged into a graphite crucible. This specifically means that the precursor of a positive electrode active material is charged into a graphite crucible. The graphite crucible is placed in a heat treatment furnace. The material is fired in a nitrogen atmosphere to form a sintered body.

First Firing Method

The No. 1 positive electrode active material and the No. 2 positive electrode active material are synthesized by a first firing method. First, the temperature in the furnace is increased to 200°C at a temperature increase rate of 3°C/min. The temperature in the furnace is maintained at 200°C for 1 hour. Then, the temperature in the furnace is increased to 650°C at a temperature increase rate of 5°C/min. The temperature in the furnace is maintained at 650°C for 5 hours. Then, the inside of the furnace is cooled to 400°C at a temperature decrease rate of 2°C/min. Further, the inside of the furnace is cooled to room temperature at a temperature decrease rate of 15°C/min.

Second Firing Method

The No.3 positive electrode active material to the No.8 positive electrode active material are synthesized by a second firing method. First, the temperature in the furnace is increased to 200°C at a temperature rise rate of 3°C/min. The temperature in the furnace is maintained at 200°C for 1 hour. Then, the temperature in the furnace is increased to 1000°C or higher at a temperature increase rate of 5°C/min to melt the precursor. Further, the temperature in the furnace may be increased to 1000°C at a temperature increase rate of 5°C/min to melt the precursor. The precursor in a melt state is maintained at 1000°C or higher for 5 hours. Further, the temperature in the furnace may be maintained at 1000°C for 5 hours. Then, the inside of the furnace is cooled to 600°C at a temperature decrease rate of 10°C/min. In other words, the temperature in the furnace is decreased to 600°C at a temperature decrease rate of 10°C/min. The temperature in the furnace is maintained at 600°C for 5 hours. Further, the inside of the furnace is cooled to room temperature at a temperature decrease rate of 15°C/min. In other words, the temperature in the furnace is decreased to room temperature at a temperature decrease rate of 15°C/min.

In the second firing method, crystallization is considered to proceed due to quenching from the melt state. It should be noted that when crystal growing proceeds in an environment at a temperature of 700°C or higher, impurities are likely to be contained. Therefore, in the second firing method, quenching to 600°C is once performed. Further, the temperature is maintained at 600°C to allow crystal growing to proceed. Therefore, impurities are expected to reduce.

Disintegration

The sintered body is disintegrated in a ball mill, a mortar, or the like. A disintegrated product is passed through a 75 μm-sieve to obtain a positive electrode active material (LMFP powder). The XRD pattern of the positive electrode active material is acquired. An intensity ratio "$I_{(200)}/I_{(020)}$" and a crystallite size "D" are measured.

Evaluation

An evaluation cell including the positive electrode active material is prepared. The evaluation cell is a liquid-based lithium-ion secondary battery. The IV resistance of the evaluation cell is measured. It is considered that the lower the IV resistance, the better the output characteristics. The "normalized IV resistance" in FIG. 3 is a value normalized by taking the IV resistance of the No. 1 positive electrode active material as 1.00.

Experimental Results

As shown in FIG. 3, the output characteristics tend to improve when the XRD pattern satisfies a relationship of "$5.8 \leq I_{(200)}/I_{(020)}$".

FIG. 4 is a graph showing a relationship between the intensity ratio "$I_{(200)}/I_{(020)}$" and the IV resistance. As shown in FIG. 4, the output characteristics tend to improve when a relationship of, for example, "$I_{(200)}/I_{(020)} \leq 16.8$" or "$I_{(200)}/I_{(020)} \leq 14.6$" is satisfied.

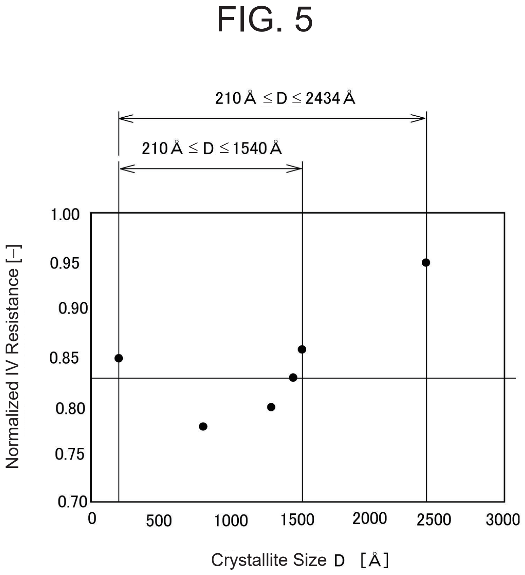

FIG. 5 is a graph showing a relationship between the crystallite size "D" and the IV resistance. In FIG. 5, the results of the No. 3 to No. 8 positive electrode active materials are plotted. As shown in FIG. 5, the output characteristics tend to improve when a relationship of, for example, "$210\,Å \leq D \leq 2434\,Å$" or "$D \leq 1540\,Å$" is satisfied.

**Claims**

1. A positive electrode active material comprising a crystal structure belonging to a space group Pnma and an X-ray diffraction pattern satisfying a relationship of $5.8 \leq I_{(200)}/I_{(020)}$, wherein the $I_{(200)}$ represents an integrated intensity of a 200 diffraction peak, and the $I_{(020)}$ represents an integrated intensity of a 020 diffraction peak.

2. The positive electrode active material according to claim 1, wherein the X-ray diffraction pattern satisfies a relationship of $I_{(200)}/I_{(020)} \leq 16.8$.

3. The positive electrode active material according to claim 2, wherein the X-ray diffraction pattern satisfies a relationship of $I_{(200)}/I_{(020)} \leq 14.6$.

4. The positive electrode active material according to any one of claims 1 to 3, further comprising a crystallite size of 210 Å or more and 2434 Å or less.

5. The positive electrode active material according to claim 4, wherein the crystallite size is 1540 Å or less.

6. The positive electrode active material according to any one of claims 1 to 3, further comprising at least one selected from the group consisting of lithium manganese phosphate and lithium manganese iron phosphate.

7. An electrode comprising a positive electrode layer (11), wherein the positive electrode layer (11) includes the positive electrode active material according to any one of claims 1 to 3.

8. A battery (100) comprising the electrode according to claim 7.

9. The battery (100) according to claim 8, further comprising a bipolar structure.

10. A method for producing a positive electrode active material, the method comprising:

> charging a precursor of the positive electrode active material into a graphite crucible;
> placing, in a heat treatment furnace in a nitrogen atmosphere, the graphite crucible into which the precursor has been charged;
> increasing a temperature in the heat treatment furnace to 200°C at a temperature increase rate of 3°C/min;
> maintaining the temperature in the heat treatment furnace at 200°C for 1 hour;
> increasing the temperature in the heat treatment furnace to 1000°C at a temperature increase rate of 5°C/min;
> maintaining the temperature in the heat treatment furnace at 1000°C for 5 hours;
> decreasing the temperature in the heat treatment furnace to 600°C at a temperature decrease rate of 10°C/min;
> maintaining the temperature in the heat treatment furnace at 600°C for 5 hours; and
> decreasing the temperature in the heat treatment furnace to room temperature at a temperature decrease rate of 15°C/min.

# FIG. 1

# FIG. 2

# FIG. 3

| No. | XRD Pattern | | Output Characteristics |
|---|---|---|---|
| | Intensity Ratio [ $I_{(200)} / I_{(020)}$ ] | Crystallite Size [D] | Normalized IV Resistance |
| | [−] | [Å] | [−] |
| 1 | 4.5 | 878 | 1.00 |
| 2 | 2.7 | 570 | 1.33 |
| 3 | 7.1 | 1316 | 0.80 |
| 4 | 14.0 | 1474 | 0.83 |
| 5 | 14.6 | 1540 | 0.86 |
| 6 | 5.8 | 210 | 0.85 |
| 7 | 11.9 | 823 | 0.78 |
| 8 | 16.8 | 2434 | 0.95 |

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016158566 A